# EUROPÄISCHE PATENTSCHRIFT

(11) **EP 1 621 060 B1**
(45) Veröffentlichungstag und Bekanntmachung des Hinweises auf die Patenterteilung: **13.06.2007**
(21) Anmeldenummer: 05016361.7
(22) Anmeldetag: 28.07.2005
(51) Int. Cl.: A01C 7/04, A01C 7/20

(54) **Pneumatische Einzelkornsämaschine**
Pneumatic single-grain seeder
Semoir pneumatique monograine

(30) Priorität: 30.07.2004 DE 102004037190
(43) Veröffentlichungstag der Anmeldung: 01.02.2006
(73) Patentinhaber: Amazonen-Werke H. Dreyer GmbH & Co. KG, 49205 Hasbergen (DE)
(72) Erfinder: Johannaber, Stefan Jan, 49536 Lienen (DE)

(56) Entgegenhaltungen:
- EP-A- 0 160 370
- DE-A1- 4 430 155
- US-A1- 2003 183 142

## Beschreibung

Die Erfindung betrifft eine pneumatische Sämaschine gemäß des Oberbegriffes des Patentanspruches 1.

Eine Sämaschine gemäß des Oberbegriffes des Anspruches 1 ist durch die US-2003-0183142 A1 bekannt. Bei dieser Sämaschine ist ein Durchbruch für die jeweilige Luftleitung in der Quertraverse angeordnet. In der Halterung, mit der Einzelkornsämaschine 14 an der Quertraverse angeordnet ist, ist jedoch keine Luftleitung bildender Durchbruch angeordnet. Viel mehr ist über die Leitung 34, dem Stutzen 50, 52 eine Verbindung zu der die Luftleitung 74 bildenden Quertraverse 12 hergestellt.

Eine weitere pneumatische Sämaschine ist in der DE 199 61 703 A1 beschrieben. Bei derartigen als Einzelkornsämaschine ausgebildeten pneumatischen Sämaschinen sind Einzelsäaggregate oder für mehre Reihen gruppenweise zusammengefasste Vereinzelungsaggregate vorgesehen, die mittels Klemmverbindungen an eine als Hohlprofil ausgebildete horizontale Quertraverse eines Tragrahmens mittels Klemmverbindungen angeklemmt sind. Die pneumatisch beaufschlagten Vereinzelungsorgane sind über Schlauchverbindungen an einen Luftverteiler, welcher von einem Gebläse mit Unter- oder Überdruck beaufschlagt wird, angeschlossen. Um die Vereinzelungsorgane an der Quertraverse anzuordnen und die Vereinzelungsorgane mit der Unter- oder Überdruckquelle zu verbinden, sind mehrere Montage- und Arbeitsgänge erforderlich.

In der US 45 22 340 ist eine pneumatisch Verteilmaschine beschrieben. Diese Verteilmaschine weist eine als Hohlprofil ausgebildete Quertraverse auf, die unterhalb eines Vorratsbehälters angeordnet ist. Diese Quertraverse wird mittels eines Gebläses mit Druckluft beaufschlagt. Die Quertraverse weist an einer ihrer Längsseiten Durchbrüche auf, welche mit Materialluftstrom führenden Schläuchen verbunden sind, so dass das Material in pneumatischer Weise zu den Ausbringelementen gefördert wird.

Der Erfindung liegt die Aufgabe zugrunde, eine einfache, schnelle und möglichst betriebsbereite Anordnung der pneumatisch beaufschlagten Vereinzelungsorgane an der horizontalen Quertraverse zu schaffen.

Diese Aufgabe wird erfindungsgemäß durch die kennzeichnenden Merkmale des Patentanspruches 1 gelöst. Der Verwirklichung dieser Maßnahmen liegt die Grundidee zugrunde, in einem Arbeits- bzw. Montagevorgang das jeweilige Vereinzelungsorgan an der Quertraverse anzuklemmen und zu befestigen, die Luftführungsverbindung zwischen dem Gebläse und dem pneumatisch beaufschlagten Vereinzelungsorgan herzustellen und die Flanschverbindung gleichzeitig abzudichten. All diese Forderungen erfüllt die in dem Patentanspruch 1 geschriebene pneumatische Sämaschine mit den dort beanspruchten Maßnahmen.

Diese einfache preiswerte und schnelle Verbindung der Vereinzelungsorgane mit der Quertraverse wird dadurch erreicht, dass die Vereinzelungsorgane mit einer Flanschverbindung an der Quertraverse angeflanscht sind, dass über die Flanschverbindung die Verbindung der Luftleitungen in der Quertraverse und in dem Gehäuse der Vereinzelungsorgane miteinander verbindbar sind.

Um die Vereinzelungsorgane in unterschiedlichen Abständen zueinander anordnen zu können, um so an ein und derselben Maschine eine unterschiedliche Vereinzelungsorgananzahl und verschiedene Reihenweiten, in denen das Saatgut im Boden abgelegt wird, zu verwirklichen, ist vorgesehen, dass in der Quertraverse mehrere und beabstandet zueinander angeordnete Durchbrüche angeordnet sind. Wenn eine geringe Anzahl von pneumatisch beaufschlagten Vereinzelungsorganen der Quertraverse angeordnet sind, so dass nicht sämtliche Durchbrüche abgedeckt sind, lassen sich diese mit Blindstopfen abdecken.

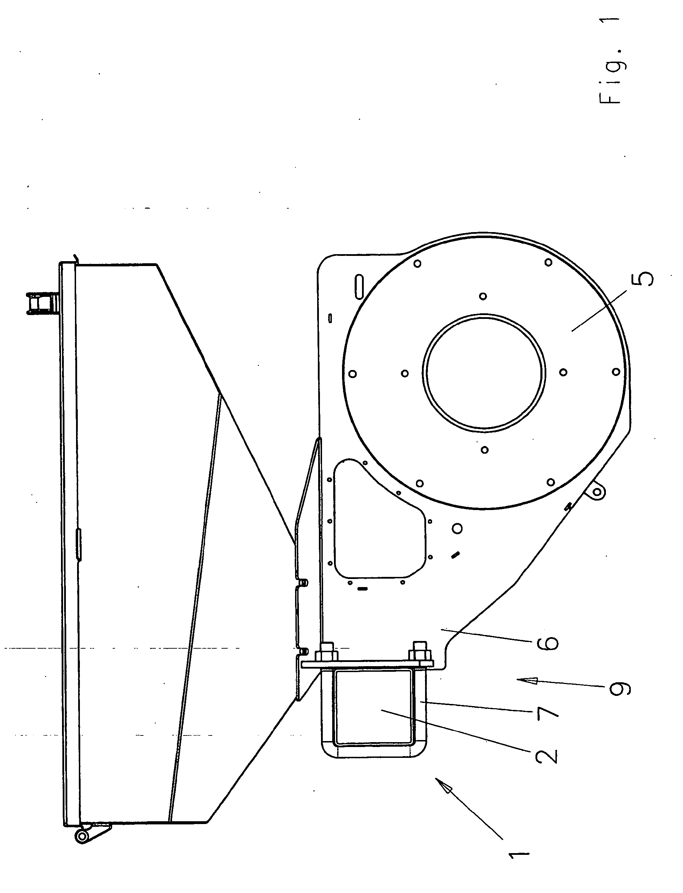

Weitere Einzelheiten der Erfindung sind der Beispielsbeschreibung und den Zeichnungen zu entnehmen. Hierbei zeigen
- Fig. 1: die Einzelkornsämaschine in Teilansicht und Seitenansicht,

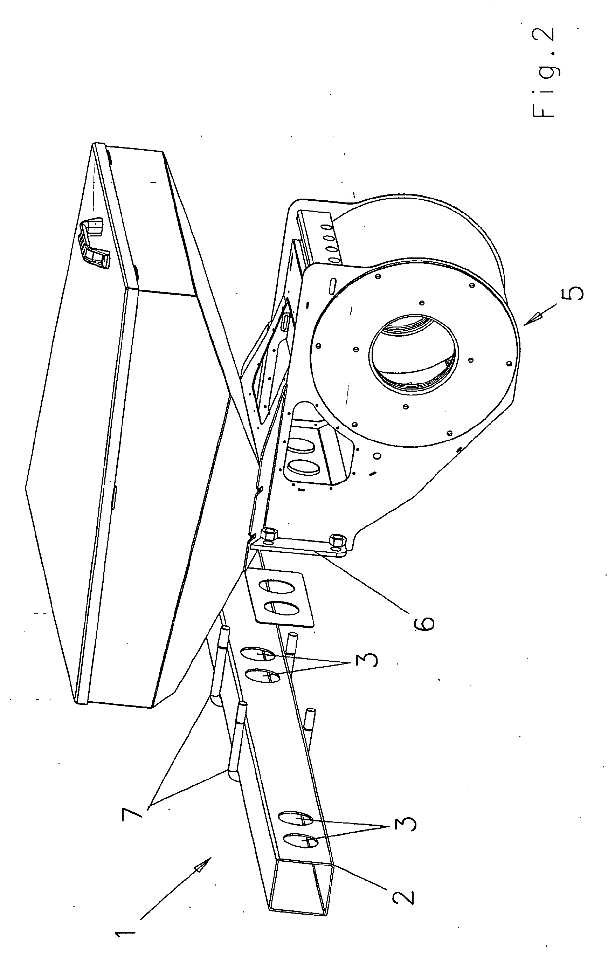

- Fig. 2: die Einzelkornsämaschine in perspektivischer Darstellung und Teildarstellung sowie in teilweise demontierter Darstellung und

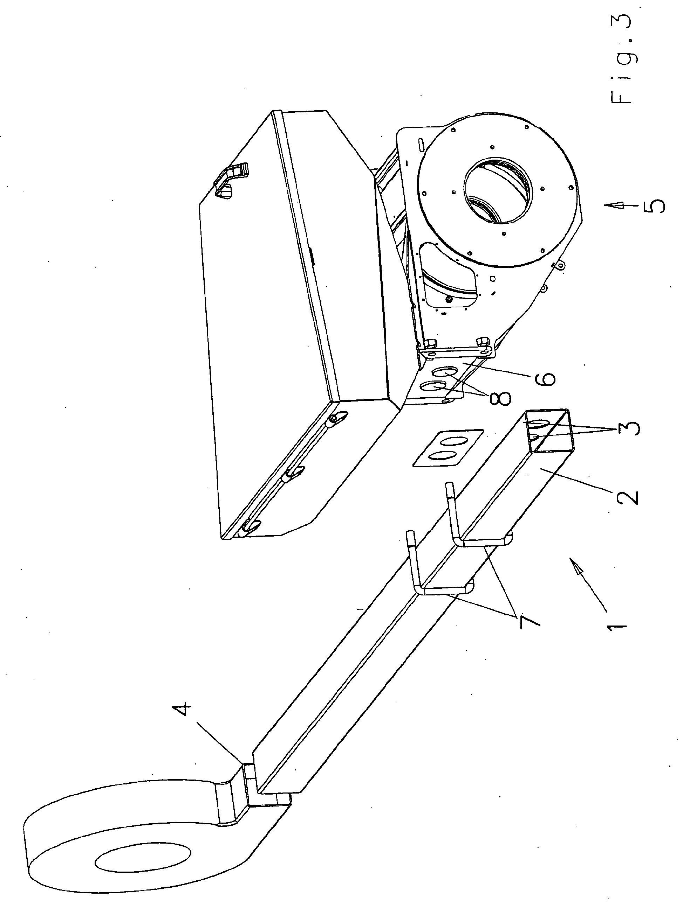

- Fig. 3: die Einzelkornsämaschine gemäß Fig. 2 in einer anderen perspektivischen Darstellung.

Die als Einzelkornsämaschine ausgebildete pneumatische Sämaschine weist den Tragrahmen 1 auf. Dieser Tragrahmen 1 besteht im wesentlichen aus einer als Hohlprofil ausgebildeter horizontalen Quertraverse 2, welche auf ihren Enden mit nicht dargestellten Endstücken verschlossen ist. An dieser Quertraverse 2 sind nicht dargestellte Kupplungselemente zum Ankuppeln des Tragrahmens beispielsweise an den Dreipunktkraftheber eines Ackerschleppers angeordnet. Auf der Rückseite der Quertraverse 2 sind in Abständen zueinander Durchbrüche 3 angeordnet. Des weiteren ist an der Quertraverse 2 zumindest ein Gebläse 4 angeschlossen. Dieses Gebläse erzeugt ein Unter- bzw. Überdruck, je nach Ausbildung der an der Quertraverse 2 angeordneten Vereinzelungsorgane 5 der Einzelkornsämaschine. Die als Hohlprofil ausgebildete Quertraverse 2 ist somit mit dem Gebläse verbunden und bildet einen Teil der Luftleitung. Die Vereinzelungsorgane 5 sind über Verbindungselemente 6 und Halterungselemente 7 an der Quertraverse 2 angeordnet. In den Verbindungselementen 6 sind Öffnungen 8 angeordnet, die zumindest etwa die gleiche Ausgestaltung wie die Durchbrüche 3 in der Quertraverse 2 aufweisen. Die Verbindungselemente 6 der Vereinzelungsorgane 5 mit den Öffnungen 8 sind Teil der Luftleitung, wie auch die Durchbrüche 3 in der Quertraverse 2 Teil der Luftleitung sind. Die Durchbrüche 3 sind derart in der Quertraverse 2 angeordnet, dass in den vorgesehenen Positionen, an denen die Vereinzelungsorgane 5 an der Quertraverse 2 angeordnet sind, die Durchbrüche 3 und die in den Verbindungselementen 6 vorgesehenen Luftöffnungen 8 zueinander zur Deckung gebracht sind. Somit sind die Luftöffnungen 8 der Luftleitungen der Vereinzelungsorgane 5 über die Verbindungselemente 6 mit den Durchbrüchen 3 in der Quertraverse 2 verbunden. Es sind also keine zusätzlichen Leitungselemente zwischen dem Gebläse und den Vereinzelungsorganen 5 erforderlich. Die Vereinzelungsorgane 5 sind mit einer Flanschverbindung 9, die von den Verbindungselementen 6 und den Halterungselementen 7 gebildet wird, an der Quertraverse 2 angeflanscht. Über die Flanschverbindung 9 wird, wie in vorbeschriebener Weise, die Verbindung der Luftleitung in der Quertraverse 2 mit der Luftleitung in dem Gehäuse der Vereinzelungsorgane 5 miteinander verbunden. Um mehrere Vereinzelungsorgane 5 beabstandet zueinander an der Quertraverse 2 anordnen zu können und hierbei gleichzeitig die Luftleitungsverbindung zwischen der Quertraverse 2 und dem Gehäuse der Vereinzelungsorgane 5 herzustellen, sind in der Quertraverse 2 mehrere beabstandet zueinander angeordnete Durchbrüche 3 in entsprechendem Abstand zueinander angeordnet. Falls an einigen Durchbrüchen 3 der Quertraverse 2 keine Vereinzelungsorgane 5 angeordnet sind, werden die Durchbrüche 3 mit nicht dargestellten Blindstopfen oder Platten abgedeckt.

## Patentansprüche

1. Pneumatische Sämaschine, insbesondere Einzelkornsämaschine mit einem eine als Hohlprofil ausgebildete horizontale Quertraverse (2) aufweisenden Tragrahmen (1), an welchem pneumatisch beaufschlagte Vereinzelungsorgane (5) angeordnet sind, wobei die Vereinzelungsorgane (5) über Verbindungselemente (6) mit einem einen Unterdruck- und/oder Überdruck erzeugenden Gebläse (4) verbunden sind, wobei die als Hohlprofil ausgebildete Quertraverse (2) mit dem Gebläse (4) verbunden und Teil der Luftleitung ist, wobei die Vereinzelungsorgane (5) an der Quertraverse (2) mittels Verbindungselementen(6) und Halterungselementen (7), angeordnet sind, wobei in der Quertraverse (2) Durchbrüche (3) vorgesehen und Teil der Luftleitung sind, wobei die Verbindungselemente (6) Teil der Luftleitung sind, **dadurch gekennzeichnet, dass** die Luftleitung der Vereinzelungsorgane (5) über die Verbindungselemente (6) mit den Durchbrüchen (3) in der Quertraverse (2) verbunden sind, dass die Vereinzelungsorgane (5) mit einer Flanschverbindung (9) an der Quertraverse (2) angeflanscht sind, dass über die Flanschverbindungen (9) die Verbindung der Luftleitung in der Quertraverse (2) und in dem Gehäuse der Vereinzelungsorgane (5) miteinander verbindbar sind.

2. Sämaschine nach Anspruch 1, **dadurch gekennzeichnet, dass** in der Quertraverse (2) mehrere und beabstandete zueinander angeordnete Durchbrüche (3) angeordnet sind.

## Claims

1. Pneumatic seed drill, more especially a single seeder seed drill with a support frame (1), which includes a horizontal transverse bar (2) that is in the form of a hollow profile, separating members (5) that are impinged upon in a pneumatic manner being disposed on the said support frame, wherein the separating members (5) are connected by means of connecting elements (6) to a blower (4) that generates a negative pressure and/or an excessive pressure, wherein the transverse bar (2) that is in the form of a hollow profile is connected to the blower (4) and is part of the air line, wherein the separating members (5) are disposed on the transverse bar (2) by means of connecting elements (6) and support elements (7), wherein openings (3) are provided in the transverse bar (2) and are part of the air line, wherein the connecting elements (6) are part of the air line, **characterised in that** the air line of the separating members (5) is connected to the openings (3) in the transverse bar (2) by means of the connecting elements (6), **in that** the separating members (5) are flange-connected to a flange connection (9) on the transverse bar (2), **in that**, by means of the flange connections (9), the connection of the air line in the transverse bar (2) and the connection of the air line in the housing of the separating members (5) are interconnectable.

2. Seed drill according to claim 1, **characterised in that** a plurality of openings (3) that are spaced apart are disposed in the transverse bar (2).

## Revendications

1. Semoir pneumatique, notamment semoir monograine comportant un châssis (1) avec une traverse (2), horizontale en forme de profilé creux, le châssis portant des organes séparateurs (5) à action pneumatique,
les organes séparateurs (5) sont reliés par des éléments de liaison (6) à une machine soufflante (4) générant une dépression et/ou pression,
la traverse (2) en forme de profilé creux est reliée à la machine soufflante (4) et fait partie de la conduite d'air,
les organes séparateurs (5) sont installés sur la traverse (2) par des éléments de liaison (6) et des éléments de fixation (7),
la traverse (2) comporte des passages (3) et fait partie de la conduite d'air,
les éléments de liaison (6) sont partie de la conduite d'air,
**caractérisé en ce que**
la conduite d'air des organes séparateurs (5) est reliée par des éléments de liaison (6) au passage (3) de la traverse (2),
les organes séparateurs (5) sont fixés par une liaison par bride (9) à la traverse (2),
les liaisons par bride (9) réalisent la liaison entre la conduite d'air de la traverse (2) et les organes séparateurs (5) du boîtier.

2. Semoir selon la revendication 1,
**caractérisé en ce que**
la traverse (2) comporte plusieurs passages (3), écartés les uns des autres.
